# EUROPEAN PATENT SPECIFICATION

(11) **EP 0 989 167 B1**
(45) Date of publication and mention of the grant of the patent: **18.12.2002**
(21) Application number: 99118635.4
(22) Date of filing: 21.09.1999
(51) Int. Cl.: C09D 11/00

(54) **Water-based ink for ink jetting and ink jet recording method**
Wässrige Tinte zum Tintenstrahldrucken und Tintenstrahl-Aufzeichnungsverfahren
Encre aqueuse pour projection d'encre et procédé d'enregistrement par jet d'encre

(30) Priority: 22.09.1998 JP 26820098
(43) Date of publication of application: 29.03.2000
(73) Proprietor: BROTHER KOGYO KABUSHIKI KAISHA, Nagoya-shi, Aichi-ken 467-8561 (JP)
(72) Inventor: Higashiyama, Shunich, C/O Brother Industries, Ltd., Nagoya-shi, Aichi-ken, 467-8561 (JP); Fujioka, Masaya, C/O Brother Industries, Ltd., Nagoya-shi, Aichi-ken, 467-8561 (JP)
(74) Representative: Prüfer, Lutz H., Dipl.-Phys.

(56) References cited:
- DE-A- 19 738 145
- US-A- 5 750 742
- PATENT ABSTRACTS OF JAPAN vol. 1998, no. 08, 30 June 1998 (1998-06-30) & JP 10 077430 A (MITSUBISHI PENCIL CO LTD), 24 March 1998 (1998-03-24)

## Description

### BACKGROUND OF THE INVENTION

### 1. Field of Invention

The present invention is related to a water-based ink for ink jetting comprising water, a water soluble organic solvent and a coloring agent as essential components. The present invention is also related to an ink jet recording method for recording by flying minute droplets of the ink.

### 2. Description of Related Art

In the ink jet recording method, ink droplets are formed by various ink jetting methods including the electrostatic suction method, a method of applying mechanical vibration or displacement using a piezoelectric element, or a method of generating bubbles by heating ink and utilizing pressure generated thereby, and recording is operated by adhering a part of or all of the formed droplets to a recording material such as paper. A lot of development of the water-based ink using water as a main solvent has been made for ink for the ink jet recording method.

The water-based ink for ink jetting needs to meet some conditions of no clogging at the head end portion of the recording apparatus or the ink passage, stable jetting, providing recording images of clear tone of color and sufficient high density and good water resistance and good friction resistance of the recorded matter.

Dye or pigment is generally used for a coloring agent of the water-based ink for ink jetting.

Pigment is better than dye in terms of water resistance; however, pigment is worse in terms of the liquid stability and the dispersion of the pigment becomes unstable by the long period preservation or the water evaporation because pigment is not dissolved but is dispersed in the ink medium. Therefore, compared to the dye ink, the pigment ink is easy to cause clogging at the end portion of the head of the ink jet printer or in the ink passage. Because the pigment exists as a particle on the recorded matter, it has a problem in terms of the friction resistance. Therefore, it is a rare case that the pigment ink for the ink jet printer has become a commercial product, and most of the pigment ink is in the development stage.

Although the water soluble dye is worse in terms of the water resistance compared to the pigment, the dye ink is hardly clogged at the end portion of the head of the ink jet printer or the ink passage and it is possible to acquire relatively easily a recorded matter of clear color tone and high density because the water soluble dye is completely dissolved in the ink medium. Therefore, there are many cases that the water-based ink for ink jet printer using water soluble dye as a coloring agent has become a commercial product

However, there has been no example of water-based ink for ink jetting that meets all conditions of sufficient jetting stability of ink jet recording, and clearness, high density recording, water resistance and friction resistance of the recorded matter.

From DE 197 38 145 A1 a water-based ink is known comprising destilled water, a propylenglycol, a water soluble acrylic resin, and a water soluble basic dye. The water soluble acrylic resin is provided as a 30 % aqueous solution, namely having a solid content of 30 %.

Therefore, it is the object of the present invention to solve the above-described problems and to provide a water-based ink for ink jetting and an ink jet recording method that meets all conditions of sufficient jetting stability of ink jet recording, and clearness, high density recording, water resistance and frictional resistance of the recorded matter.

Such an object is solved by a water-based ink as is claimed in the independent claim 1 and by a method of preparing a water-based ink as claimed in the independant claim 6.

Preferred developments of the invention are given in dependent claims.

As apparent from the above explanation, the water-based ink for ink jetting of the invention includes water soluble colored resin wherein the water soluble resin as a main component of the coloring agent is uniformly coloring processed by the basic dye. Preferably, the water soluble resin component of the water soluble colored resin is selected from 5,5'-dimethylhydantoinformaldehyde resin obtained by copolymerization of 5,5'-dimethylhydantoin and formaldehyde, or 1-methylol-5,5'-dimethylhydantoin resin obtained by condensation polymerization of 1-methylol-5,5'-dimethylhydantoin, or polyvinylpyrrolidone obtained by addition polymerization of vinylpyrolidone. More preferably, molecular weight of the water soluble resin of the water soluble colored resin is equal to or less than 10000. More preferably, the compounding ratio of the water soluble resin and the basic dye in the water soluble colored resin is within a range of 10:1 to 1:1. More preferably, the content amount of the water soluble colored resin in ink is from I to 10 weight %. Therefore, the stable jetting, clearness of the recorded matter, high density recording, water resistance, and friction resistance are well-balanced and excellent in ink jet recording. The ink of the invention is useful for ink for various types of ink jet recording and the ink jet recording method used with the ink can provide excellent recording.

The ink jet recording method of the invention is characterized in recording using the above-described water-based ink for ink jetting. Therefore, the stable jetting, clearness of the recorded matter, high density recording, water resistance, friction resistance are well-balanced and excellent in ink jet recording. The ink of the invention is useful for ink for various types of ink jet recording and the ink jet recording method used with the ink can provide excellent recording.

### DETAILED DESCRIPTION OF PREFERRED EMBODIMENTS

The preferred embodiments of the invention will be explained.

Water soluble colored resin that is a main component of a coloring agent of the invention is water soluble resin that is uniformly colored by basic dye. By using the water soluble colored resin as a coloring agent for the water-based ink for ink jetting, great excellent water resistance can be obtained as compared to the water-based ink using dye as a coloring agent. Because the water soluble colored resin is completely dissolved in the ink as same as the case that dye is used as a coloring agent, recording excellent in clearness, high density recording and friction resistance can be obtained without obstructing the stable jetting.

The reason that the excellent water resistance can be obtained by using the water soluble colored resin is as follows.

In the coloring process of the water soluble colored resin of the invention, a weak combination of the water soluble resin and basic dye is formed, and the combination is maintained as a minute association body after the water soluble colored resin is dissolved and mixed in the ink. Namely, the basic dye on the recorded matter is maintained by the combination with the water soluble resin and, therefore, even if water is supplied after the recorded matter is dried, the basic dye is not easily washed out by water by reason that the dispersion speed of the water soluble resin into the water is slow.

Thus, by using water soluble colored resin, the water-based ink for ink jetting and the ink jet recording method being excellent in stable jetting, clearness, high density recording, water resistance and friction resistance can be achieved.

The water soluble colored resin having solubility to water of 5% or more than 5% and slow dissolution speed and a characteristic that its aqueous solution does not cause remarkable viscosity is preferably used for the invention. In particular, 5,5'-dimethylhydantoinformaldehyde resin obtained by copolymerization of 5,5'-dimethylhydantoin and formaldehyde, or 1-methylol-5,5'-dimethylhydantoin resin obtained by condensation polymerization of 1-methylol-5,5'-dimethylhydantoin, or polyvinylpyrrolidone obtained by addition polymerization, or derivatives thereof can be used for the water soluble colored resin of the invention. However, the water soluble colored resin is not limited to the above-described ones so long as the effect of the invention can be obtained. Moreover, more than two kinds of resins can be mixed to be used. The molecular weight of the water soluble resin is preferable equal to or less than 10000. As used herein, "mean (average) molecular weight" or "molecular weight" means weight average molecular weight.

Various ones on the market can be used for the basic dye of the invention. In particular, color index number basic red 1, 1:1, 2, 12, 13, 14, 18, 22, 27, 28, 29, 34, 38, 39, 46, 46:1, 67, 69, 70, color index number basic violet 1, 2, 3, 4, 5, 7, 8, 10, 11, 11:1, 20, 33, color index number basic blue 3, 6, 7, 9, 11, 12, 16, 17, 24, 26, 41, 47, 66, color index number basic green 1, 4, 5, color index number basic yellow 1, 11, 19, 21, 24, 25, 28, 29, 36, 45, 51, 67, 73, color index number basic orange 14, 21, 22, 32, color index number basic brown 1, 4 can be used for the basic dye of the invention, however, the basic dye is not limited to the above-described ones. Moreover, more than two kinds of basic dyes can be mixed to be used, and in this case, a desired color that cannot be obtained by only one kind can be obtained.

Because the basic dye that is in the condition on the market may include a great amount of inorganic impurities such as sodium sulfate, a purifying process by ion exchange resin or filtration can be provided if necessary. When the basic dye includes a great amount of inorganic impurities, the combination in the coloring process may be obstructed or sufficient coloring may not be obtained or the inorganic impurities may be deposited at the head end portion and cause clogging. From the above-described points, the purity of the basic dye is preferably equal to or more than 90% and more preferably equal to or more than 95%.

The compounding ratio of the water soluble resin and the basic dye in the water soluble colored resin is preferably in the range from 10:1 to 1:1. If the compounding ratio of the basic dye is less than the above-mentioned ratio, sufficient coloring may not be obtained, and if the compounding ratio is more than the above-mentioned ratio, the effect of the combination of the water soluble resin and the basic dye may not be fully obtained.

The water soluble colored resin of the invention can be processed, for example, by any one of the methods described below.
1) Heating the water soluble resin to a temperature of equal to or more than 60°C to make liquid of low viscosity, and adding the basic dye to the liquid, and after mixing and stirring them to become an uniform condition, cooling it to the ordinary (i.e., room) temperature to obtain the water soluble colored resin.
2) Heating the nonvolatile organic solvent that is an ink component to a temperature of equal to or more than 60°C, and after adding the water soluble resin and basic dye to the heated solvent and mixing and stirring to become a uniform condition, cooling it to the ordinary temperature to obtain the nonvolatile organic solvent solution of the water soluble colored resin.

The preferable content by amount of the water soluble colored resin obtained by the above-described method as a coloring agent in water-based ink for ink jetting is 1 - 10 weight % relative to the total amount of ink, more preferably 2-6 weight %. If the content by amount of the water soluble colored resin is less than 1 weight %, sufficient coloring may not be obtained and the clear and high density recording may not be obtained. If the content by amount of the water soluble colored resin is more than 10 weight %, the ink may be more viscous than is desirable, the stable jetting may be obstructed and drying of the ink on the recording paper may become extremely slow.

The solvent used in the invention can be a mixed solvent of water and a water soluble organic solvent.

For water, general water containing various ions is not preferable, but instead deionized water is preferable. The content by amount of water is decided in a broad range according to the characteristic of the desired ink, and generally the content by amount of water is 10-90 weight % relative to the total amount of ink, preferably 40-80 weight %.

The water soluble organic solvent is used mainly for the purpose of preventing drying of ink at the top end of the ink jet head, therefore, a solvent of low volatility is preferably used. Such water soluble organic solvents include polyalkyleneglycol such as polyethyleneglycol; alkyleneglycol such as ethyleneglycol, propyleneglycol, butyleneglycol, diethyleneglycol, depro pyleneglycol, triethyleneglycol, tripropyleneglycol, 1,2,6-hexanetriol, thiodiglycol, 1,3-butanediol, 1, 5-pentanediol, hexyleneglycol; and pyrolidone such as 2-pyrolidone, N-methyl-2-pyrolidone. Either one kind of the above-described water soluble organic solvents can be used, or more than two kinds of the above-described water soluble organic solvents can be mixed to be used.

The content amount of the above-described water soluble organic solvent in the ink can be 5-50 weight % relative to the total amount of ink, preferably 7-40 weight %, more preferably 10-30 weight %. If the content amount of the water soluble organic solvent is less than 5 weight %, the wetting operation may become insufficient and clogging may be caused. If the content amount of the water soluble organic solvent is more than 50 weight %, ink may be more viscous than is desirable, and jetting may become impossible and drying of the ink on the recording paper may become extremely slow.

The basic composition of the ink of the invention and used for the invention is described above, and the various known agents such as penetrating agent, dispersing agent, surface active agent, viscosity adjusting agent, surface tension adjusting agent, pH adjusting agent, antiseptics and mildewproof agent can be added if necessary.

As the penetrating agent, polyhydric alcohol monoalkylether that has 0.1mmHg or less than 0.1mmHg of steam pressure at 20°C is preferably used. Polyhydric alcohol monoalkylether that has characterisitics as follows is preferably used; by gathering effectively the penetrating speed of ink into the recording paper, improving the fast drying of ink on the paper, preventing bleeding (bleeding on the border of different colors) caused by the slow drying of ink on the paper, and being difficult to cause feathering (feathering of a mustache shape along the paper fiber).

Examples of polyhydric alcohol monoalkylether are diethyleneglycolmonomethylether (0.1mmHg of steam pressure at 20°C), diethyleneglycolmonobuthylether (0.01mmHg of steam pressure at 20°C), diethyleneglycolmonoisobuthylether (0.01mmHg of steam pressure at 20°C), dipropyleneglycolmonomethylether (0.06mmHg of steam pressure at 20°C), dipropyleneglycolmonopropylether (0.02mmHg of steam pressure at 20°C), dipropyleneglycolmonoisopropylether (0.05mmHg of steam pressure at 20°C), dipropyleneglycolmonobuthylether (0.05mmHg of steam pressure at 20°C), triethyleneglycolmonomethylether (less than 0.01mmHg of steam pressure at 20°C), triethyleneglycolmonobuthylether (less than 0.01mmHg of steam pressure at 20°C), tripropyleneglycolmonomethylether (0.02mmHg of steam pressure at 20°C), and tripropyleneglycolmonobuthylether (less than 0.01mmhg of steam pressure at 20°C).

General polyhydric alcohol monoalkylether has a peculiar smell and, if a polyhydric alcohol monoalkylether that has a steam pressure of more than 0.1mmHg at 20°C is used for ink, the ink itself may have a terrible smell and therefore it may cause a problem for use in the office or at home. However, the above-described polyhydric alcohol monoalkylether that has a low steam pressure of 0.1mmHg or less than 0.1mmHg at 20°C has little smell if used for ink, and therefore the problem described above does not result.

Moreover, among the above-described polyhydric alcohol monoalkylether, those having less than 0.01mmHg of steam pressure at 20°C have especially little smell and therefore they are preferably used for ink. The content amount of the above-described polyhydric alcohol monoalkylether in the ink is preferably 3-15 weight % relative to the total amount of ink. If the content amount of the above-described polyhydric alcohol monoalkylether is less than 3 weight %, the penetrating speed of ink into the recording paper may be slow and problems may be caused for drying time and bleeding. If the content amount of the above-described polyhydric alcohol monoalkylether is more than 15 weight %, ink may penetrate into the recording paper terribly and ink may penetrate to the rear side of the recording paper and a problem of feathering may be caused.

Monatomic alcohol such as ethylalcohol, 1-propanol, and 2-propanol can be added if necessary for the purpose of controlling the degree of penetration and drying.

When ink for the ink jet recording method of charging recording liquid is compounded, a resistivity adjusting agent such as inorganic salt including lithium chloride, ammonium chloride, or sodium chloride can be added.

When the ink is used for the ink jet method of jetting ink by the operation of heat energy, the material value of heat (for example, specific heat, coefficient of thermal expansion, and coefficient of thermal conductivity) may be adjusted.

In the ink of the invention and the ink jet recording method used with the ink, the problems of the prior art are fully solved and the stable jetting, clearness of the recorded matter, high density recording, water resistance, and friction resistance are well-balanced and excellent ink jet recording is obtained. The ink of the invention is useful for ink for various types of ink jet recording and the ink jet recording method used with the ink can provide excellent recording.

### Examples

Examples of the invention will be explained.

In the following discussion and the tables, % means percent by weight.

The water soluble colored resin of the invention is obtained as described in table 1.

**Table 1**

| | coloring resin | | | | | | |
|---|---|---|---|---|---|---|---|
| | Sample 1 | Sample 2 | Sample 3 | Sample 4 | Sample 5 | Sample 6 | Sample 7 |
| DMH | 80% | 90% | 75% | 60% | | | |
| MDMH | | | | | 60% | 80% | |
| PVP | | | | | | | 10% |
| BR1:1 | 20% | | | | | | |
| BB3 | | 10% | | | | | |
| BY40 | | | 25% | 20% | | | |
| BV1 | | | | 20% | | | |
| BV11:1 | | | | | 40% | 20% | 10% |
| PEG | | | | | | | 80% |
| total | 100% | 100% | 100% | 100% | 100% | 100% | 100% |

DMH; 5,5'-dimemylhydantoinformaldehyde resin (approximately 4000 of average molecular weight)
MDMH; 1-methylol-5,5'-dimethylhydantoin resin (approximately 2000 of average molecular weight)
PVP; polyvinylpyrolidone (approximately 9000 of average molecular weight)
BR1:1; color index number basic red 1:1
BB3; color index number basic blue 3
BY40; color index number basic yellow 40
BV1; color index number basic violet 1
BV11:1; color index number basic violet 11:1
PEG; polyethyleneglycol #200 (approximately 200 of average molecular weight)

In Samples 1-6 of coloring resin, the water soluble resin described in each Sample is melted to become liquid under a condition of the heating temperature of approximately 120°C and the basic dye described in each Example is added thereto and mixed and stirred for one hour and after that the mixture is cooled to become a normal temperature and the solid material of coloring resin is obtained.

In Sample 7 of coloring resin, the water soluble resin described in the Sample and the basic dye described in the Sample are added to the water soluble organic solvent described in the Sample that is heated to 100°C and stirred to be mixed for two hours and after that the mixture is cooled to become a normal temperature and the water soluble organic solvent of the coloring resin is obtained.

The molecular weight of the water soluble resin described in Table 1 is an average molecular weight, and it can be obtained by the light scattering method or the gel filtration chromatography.

### Example 1

| liquid composition | |
|---|---|
| coloring resin Sample 1 | 5% |
| polyethyleneglycol (average molecular weight 200) | 10% |
| triethyleneglycolmonomethylether | 6% |
| pure (deionized) water | 79% |

After the above described materials are stirred to be mixed for enough time, the mixture is filtered with a membrane filter of 0.8µm thickness to become ink.

By using the above-obtained ink in the following recording apparatus, the following experimental evaluation is made and good results are obtained in the recording apparatus. The recording apparatuses include: a recording apparatus having an on-demand type multi head (a diameter of jetting orifice is 35µm, a value of a heating resistor is 150Ω, driving voltage is 30V, frequency is 2KHz) that generates ink droplets by applying heat energy to the ink in the recording head.

(Experimental evaluation 1) jetting stability: In each of the atmosphere of the room temperature (25°C), 5°C, and 40°C, successive jetting is made for 24 hours. Stable and high quality recording is made from the beginning to the end.

(Experimental evaluation 2) jetting response: It is evaluated for the intermittent jetting of every two seconds and jetting after two-months of non-use, no clogging is caused at the top end of the orifice in either case and stable and uniform recording is made.

(Experimental evaluation 3) quality of recorded images: An image recorded on the following recording materials has high density and clearness and its color tone is clear magenta. recording materials:
"XEROX 4200" of XEROX
"XEROX L" of XEROX
"HAMMERMIL COPYPLUS WHITE" of non size paper
"TOYO FILTER PAPER No:4" non size paper of TOYO ROSHI

(Experimental evaluation 4) friction resistance of each recording material: After five minutes the jetting recording is made onto the recording materials described in Experimental evaluation 3, it is checked whether any image shear or blur is caused by rubbing the ink adhering part by a finger. There is no image shear or blur and the recorded image has excellent fixing.

(Experimental evaluation 5) water resistance of each recording material: After the recording materials having the characters and images recorded thereon described in Experimental evaluation 3 are soaked in tap water for thirty seconds and are taken out of the tap water and dried naturally, the degradation of the recorded characters and images is checked. There is no blur and the recorded characters can be read.

### Example 2

Ink is prepared using the following liquid composition by the same method as of Example 1 and the evaluation of Experimental evaluation 1-5 is made using the recording apparatus as in Example 1. Excellent results are obtained as in Example 1. The color tone in Experimental evaluation 3 is clear magenta.

| liquid composition | |
|---|---|
| coloring resin Sample 2 | 5% |
| polyethyleneglycol (average molecular weight 200) | 10% |
| triethyleneglycolmonomethylether | 6% |
| pure (deionized) water | 79% |

### Example 3

Ink is prepared using the following liquid composition by the same method as Example 1 and the evaluation of Experimental evaluation 1-5 is made using the recording apparatus as in Example 1. Excellent results are obtained as in Example 1. The color tone in Experimental evaluation 3 is clear yellow.

| liquid composition | |
|---|---|
| coloring resin Sample 3 | 5% |
| polyethyleneglycol (average molecular weight 200) | 10% |
| triethyleneglycolmonomethylether | 6% |
| pure (deionized) water | 79% |

### Example 4

Ink is prepared using the following liquid composition by the same method as Example 1 and the evaluation of Experimental evaluation 1-5 is made using the recording apparatus as in Example 1. Excellent results are obtained as in Example 1. The color tone in Experimental evaluation 3 is clear black.

| liquid composition | |
|---|---|
| coloring resin Sample 4 | 5% |
| polyethyleneglycol (average molecular weight 200) | 10% |
| triethyleneglycolmonomethylether | 6% |
| pure (deionized) water | 79% |

Next, the full color recording is made by the recording apparatus described in Example 1 using the ink of Examples 1-4 as magenta ink, cyan ink, yellow ink and black ink respectively, and the recording result having clearness, high density and good color tone is obtained. The recorded images and characters do not have any bleeding or feathering and they have good printing quality.

### Example 5

Ink is prepared using the following liquid composition by the same method as Example 1 and the evaluation of Experimental evaluation 1-5 is made using the recording apparatus as in Example 1. Excellent results are obtained as in Example 1.

| liquid composition. | |
|---|---|
| coloring resin Sample 5 | 2% |
| glyceline | 20% |
| 2-pyrolidone | 10% |
| triethylenglycolmonobuthylether | 4% |
| pure (deionized) water | 64% |

### Example 6

Ink is prepared using the following liquid composition by the same method as Example 1 and the evaluation of Experimental evaluation 1-5 is made using the recording apparatus as in Example 1. Excellent results are obtained as in Example 1.

| liquid composition | |
|---|---|
| coloring resin Sample 6 | 4% |
| glyceline | 25% |
| triethylenglycolmonobuthylether | 8% |
| pure (deionized) water | 63% |

### Example 7

Ink is prepared using the following liquid composition by the same method as Example 1 and the evaluation of Experimental evaluation 1-5 is made using the recording apparatus as in Example 1. Excellent results are obtained as in Example 1.

| liquid composition | |
|---|---|
| coloring resin Sample 7 (including 16% of polyethyleneglycol) | 20% |
| color index number basic yellow 37 | 1% |
| 2-pyrolidone | 10% |
| triethylenglycolmonobuthylether | 4% |
| pure (deionized) water | 65% |

### Comparative Example 1

Ink is prepared using the following liquid composition by the same method as Example 1 and Experimental evaluation 1-5 is made using the recording apparatus as in Example 1. As a result, in Experimental evaluation 3, the recording lacks clearness and has low density. In Experimental evaluation 5, terrible blur is generated and the recorded characters are hard to read.

| liquid composition | |
|---|---|
| color index number direct red 227 | 1% |
| polyethyleneglycol (average molecular weight 200) | 10% |
| triethyleneglycolmonomethylether | 6% |
| pure (deionized) water | 83% |

### Comparative Example 2

Ink is prepared using the following liquid composition by the same method as Example 1 and Experimental evaluation 1-5 is made using the recording apparatus as in Example 1. As a result, in Experimental evaluation 3, the clearness of the images is not sufficient and in Experimental evaluation 5, although the recorded characters can be read, many blurs are caused.

| liquid composition | |
|---|---|
| color index number basic violet 11:1 | 1% |
| polyethyleneglycol (average molecular weight 200) | 10% |
| triethyleneglycolmonomethylether | 6% |
| pure (deionized) water | 83% |

### Comparative Example 3

Ink is prepared using the following liquid composition by the same method as Example 1 and Experimental evaluation 1-5 is made using the recording apparatus as in Example 1. As a result, in Experimental evaluation 1, unstable jetting is observed partly. In Experimental evaluation 2, bent jetting or non-jetting is caused in the jetting after two-months of non-use.

| liquid composition | |
|---|---|
| coloring resin Sample 1 | 15% |
| polyethyleneglycol (average molecular weight 200) | 10% |
| triethyleneglycolmonomethylether | 6% |
| pure (deionized) water | 69% |

Next, the comparative coloring resin is obtained for comparative examples as shown in Table 2.

**Table 2**

| | Comparative coloring resin | | |
|---|---|---|---|
| | Sample 1 | Sample 2 | Sample 3 |
| DMH | 30% | 80% | |
| PVP(2) | | | 24% |
| BR1:1 | 70% | | 6% |
| DR227 | | 20% | |
| Water | | | 70% |
| Total | 100% | 100% | 100% |

DMH; 5,5'-dimethylhydantoinformaldehyde resin (approximately 4000 of average molecular weight)
PVP(2); polyvinylpyrolidone (approximately 29000 of average molecular weight)
BR1:1; color index number basic red 1:1
DR227; color index number direct red 227

In the comparative coloring resin Samples 1 and 2, the water soluble resin described in each Comparative Sample is melted to become liquid under a condition of the heating temperature of approximately 120°C and the dye described in each Comparative Sample is added thereto and mixed and stirred for one hour and after that the mixture is cooled to become a normal temperature and a solid material of comparative coloring resin is obtained.

In the comparative coloring resin Sample 3, the water soluble resin described in the example and the basic dye described in the example are mixed in the solvent of water and stirred for one hour at a normal temperature. After that a solid material of the comparative coloring resin is obtained by the freeze drying method.

### Comparative Example 4

Ink is prepared using the following liquid composition by the same method as Example 1 and Experimental evaluation 1-5 is made using the recording apparatus as in Example 1. As a result, in Experimental evaluation 5, an apparent blur is caused.

| liquid composition | |
|---|---|
| comparative coloring resin Sample 1 | 3% |
| polyethyleneglycol (average molecular weight 200) | 10% |
| triethyleneglycolmonomethylether | 6% |
| pure (deionized) water | 81% |

### Comparative Example 5

Ink is prepared using the following liquid composition by the same method as Example 1 and Experimental evaluation 1-5 is made using the recording apparatus as in Example 1. As a result, in Experimental evaluation 3, the recording lacks clearness and has low density. In Experimental evaluation 5, terrible blur is caused and the recorded characters cannot be read.

| liquid composition | |
|---|---|
| comparative coloring resin Sample 2 | 5% |
| polyethyleneglycol (average molecular weight 200) | 10% |
| triethyleneglycolmonomethylether | 6% |
| pure (deionized) water | 79% |

### Comparative Example 6

Ink is prepared using the following liquid composition by the same method as Example 1 and Experimental evaluation 1-5 is made using the recording apparatus as in Example 1. As a result, in Experimental evaluation 1, unstable jetting is observed frequently. In Experimental evaluation 2, bent jetting or non-jetting is caused in the jetting after two-months of non-use.

| liquid composition | |
|---|---|
| comparative coloring resin Sample 3 | 4% |
| triethyleneglycol | 16% |
| pure (deionized) water | 80% |

The results of Experimental Evaluation 1-5 for the above-described Examples and Comparative Examples are described in Table 3.

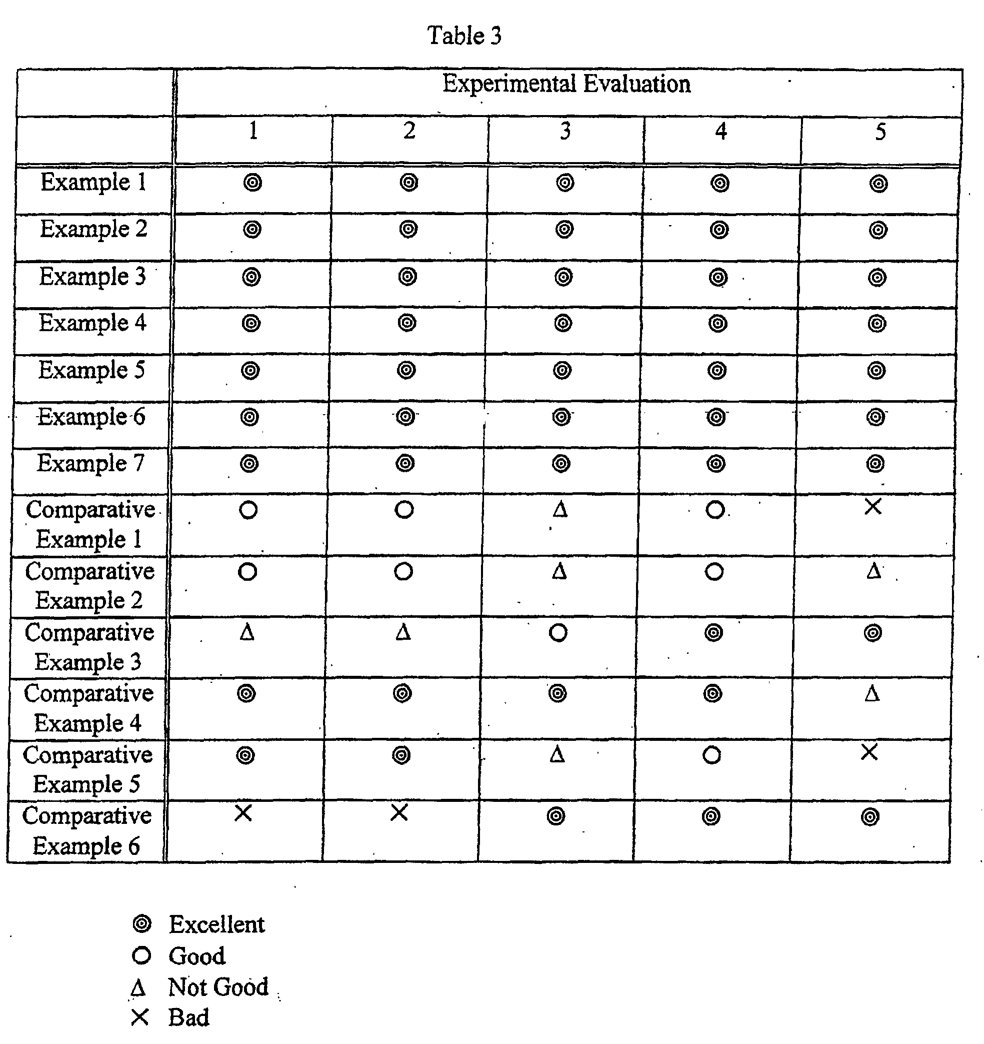

As described in Table 3, in Examples of the invention, the stable jetting, clearness of the recorded matter, high density recording, water resistance, and friction resistance are well-balanced and excellent ink jet recording is obtained. The ink of the invention is useful for ink for various types of ink jet recording and the ink jet recording method used with the ink can provide excellent recording. On the other hand, in the Comparative Examples, a problem is caused in at least one of the Experimental Evaluations.

## Claims

1. Water-based ink for ink jetting comprising water, a water soluble organic solvent and a coloring agent as essential components,
wherein the coloring agent comprises a water soluble colored resin,
wherein a water soluble resin as a main component of the coloring agent is selected from the group consisting of 5,5'-dimethylhydantoinformaldehyde resin obtained by copolymerization of 5,5'-dimethylhydantoin and formaldehyde,1-methylol-5,5'-dimethylhydantoin resin obtained by condensation polymerization of 1-methylol-5,5'-dimethylhydantoin, and is uniformly coloring processed by a basic dye, by heating the water soluble resin to make a liquid of low viscosity and adding the basic dye to the liquid or heating the water soluble organic solvent and adding the water soluble resin and the basic dye to the heated solvent, mixing and stirring the result to become uniform, and cooling the result to obtain the water soluble colored resin.

2. The water-based ink according to claim 1,
wherein a molecular weight of the water soluble resin of the water soluble colored resin is equal to or less than 10000.

3. The water-based ink according to claim 1 or 2,
wherein a compounding ratio of the water soluble resin and the basic dye in the water soluble colored resin is within a range of 10:1 to 1:1.

4. The water-based ink according to one of claims 1 to 3,
wherein a content amount of the water soluble colored resin in the ink is from 1 to 10 weight %.

5. Ink jet recording method for a recording operation by flying minute droplets of water-based ink for ink jetting that comprises water, a water soluble organic resin and a coloring agent as essential components, wherein the water-based ink for ink jetting of claim 1 is used as the ink.

6. A method of preparing a water-based ink for ink jetting comprising water, a water soluble organic solvent and a coloring agent as essential components,
wherein the coloring agent comprises a water soluble colored resin,
wherein a water soluble resin as a main component of the coloring agent is uniformly coloring processed by a basic dye, by the steps of:
heating the water soluble resin to make a liquid of low viscosity and adding the basic dye to the liquid,
mixing and stirring the result to become uniform,
cooling the result to obtain the water soluble colored resin,
adding the water and the water soluble organic solvent to the water soluble colored resin, and
mixing, stirring, and filtering the result to obtain the water-based ink.

7. The method according to claim 6,
wherein the water soluble resin component of the water soluble colored resin is selected from the group consisting of 5,5'-dimethyl-hydantoinformaldehyde resin obtained by copolymerization of 5,5'-dimethylhydantoin and formaldehyde,1-methylol-5,5'-dimethylhydantoin resin obtained by condensation polymerization of 1-methylol-5,5'-dimethylhydantoin.

8. The method according to claim 6 or 7,
wherein a molecular weight of the water soluble resin of the water soluble resin colored resin is set equal to or less than 10000.

9. The method according to one of claims 6 to 8,
wherein a compounding ratio of the water soluble resin and the basic dye in the water soluble resin is within a range of 10:1 to 1:1.

10. The method according to one of claims 6 to 9,
wherein a content amount of the water soluble colored resin in the ink is from 1 to 10 weight %.

## Patentansprüche

1. Wäßrige Tinte zum Tintenausspritzen mit Wasser, einem wasserlöslichen organischen Lösungsmittel und einem Färbemittel als wesentliche Komponenten,
worin das Färbemittel ein wasserlösliches gefärbtes Harz aufweist,
worin ein wasserlösliches Harz als eine Hauptkomponente des Färbemittels gewählt wird aus der Gruppe, die aus 5,5'-Dimethylhydantoinformaldehyd-Harz, das durch Kopolymerisation von 5,5'-Dimethlhydantoin und Formaldehyd erhalten ist, 1-Methylol-5,5'-Dimethlyhdantoin-Harz, das durch Kondensationspolymerisation von 1-Methylol-5,5'-Methlyhydantoin erhalten ist,
und gleichförmig farbbearbeitet durch einen Basenfarbstoff ist,
durch Erwärmen des wasserlöslichen Harzes zum Erhalten einer Flüssigkeit niedriger Viskosität und Hinzugeben des Basenfarbstoffes zu der Flüssigkeit oder Erwärmen des wasserlöslichen organischen Lösungsmittel und Hinzugeben des wasserlöslichen Harzes und des Farbstoffes zu dem erwärmten Lösungsmittel, Mischen und Rühren des Resultates so daß es gleichförmig wird, und Abkühlen des Resultates zum Erhalten des wasserlöslichen gefärbten Harzes.

2. Wäßrige Tinte nach Anspruch 1,
bei der ein Molekulargewicht des wasserlöslichen Harzes des wasserlöslichen gefärbten Harzes gleich oder weniger als 10000 ist.

3. wäßrige Tinte nach Anspruch 1 oder 2,
bei der ein Verbindungsverhältnis des wasserlöslichen Harzes und des Basenfarbstoffes in dem wasserlöslichen gefärbten Harz in einem Bereich von 10:1 bis 1:1 liegt.

4. Wäßrige Tinte nach einem der Ansprüche 1 bis 3,
bei der ein Inhaltsbetrag des wasserlöslichen gefärbten Harzes in der Tinte von 1 bis 10 Gew.% ist.

5. Tintenstrahlaufzeichnungsverfahren für eine Aufzeichnungstätigkeit durch Fliegenlassen kleiner Tröpfchen einer wäßrigen Tinte zum Tintenausspritzen, die Wasser, ein wasserlösliches organisches Harz und ein Färbemittel als wesentliche Komponente aufweist, wobei die wäßrige Tinte zum Tintenausspritzen nach Anspruch 1 als die Tinte benutzt wird.

6. Verfahren zum Darstellen einer wäßrigen Tinte zum Tintenausspritzen mit Wasser, einem wasserlöslichen organischen Lösungsmittel und einem Färbemittel als wesentliche Komponenten,
worin das Färbemittel ein wasserlösliches gefärbtes Harz aufweist,
worin ein wasserlösliches Harz als eine Hauptkomponente des Färbemittels gleichförmig durch ein Basenfarbstoff farbbearbeitet ist, mit den Schritten:
Erwärmen des wasserlöslichen Harzes zum Herstellen einer Flüssigkeit niedriger Viskosität und Hinzufügen des Basenfarbstoffes zu der Flüssigkeit,
Mischen und Rühren des Resultates, so daß es gleichförmig ist,
Kühlen des Resultates zum Erhalten des wasserlöslichen gefärbten Harzes,
Hinzufügen des Wassers und des wasserlöslichen organischen Lösungsmittels zu dem wasserlöslichen gefärbten Harz und
Mischen, Rühren und Filtern des Resultates zum Erhalten der wäßrigen Tinte.

7. Verfahren nach Anspruch 6,
bei dem die wasserlösliche Harzkomponente des wasserlöslichen gefärbten Harzes aus der Gruppe gewählt ist, die besteht aus 5,5'-Dimethylhydantoinformaldehyd-Harz, das durch Kopolymerisation von 5,5'-Dimethylhydantoin und Formaldehyd erhalten ist, 1-Methlylol-5,5'-Dimethlhydantoin-Harz, das durch Kondensationspolymerisation von 1-Methylol-5,5'-Dimethylhydantoin erhalten wird.

8. Verfahren nach Anspruch 6 oder 7, bei dem ein Molekulargewicht des wasserlöslichen Harzes des wasserlöslichen gefärbten Harzes gleich oder weniger als 10000 gesetzt ist.

9. Verfahren nach einem der Ansprüche 6 bis 8,
bei der ein Verbindungsverhältnis des wasserlöslichen Harzes und des Basenfarbstoffes in dem wasserlöslichen Harz in einem Bereich von 10:1 bis 1:1 liegt.

10. Verfahren nach einem der Ansprüche 6 bis 9,
bei dem ein Inhaltsbetrag des wasserlöslichen gefärbten Harzes in der Tinte von 1 bis 10 Gew.% beträgt.

## Revendications

1. Encre à l'eau pour jet d'encre comprenant de l'eau, un solvant organique soluble dans l'eau et un agent colorant comme composants essentiels,
dans laquelle, l'agent colorant comprend une résine colorée soluble dans l'eau,
dans laquelle une résine soluble dans l'eau, servant de composant principal de l'agent colorant, est choisie dans le groupe consistant en une résine de 5,5'-diméthylhydantoïneformaldéhyde obtenue par copolymérisation de 5,5'-diméthylhydantoïne et de formaldéhyde, une résine de 1-méthylol-5,5'-diméthylhydantoïne, obtenue par polymérisation par condensation de 1-méthylol-5,5'-diméthylhydantoïne, et subit un traitement de coloration uniforme par un colorant basique, par chauffage de la résine soluble dans l'eau pour préparer un liquide de faible viscosité, et addition du colorant basique au liquide, ou chauffage du solvant organique soluble dans l'eau et addition de la résine soluble dans l'eau et du colorant basique au solvant chauffé, mélange et agitation du produit résultant pour le rendre uniforme, et refroidissement du produit résultant pour obtenir la résine colorée soluble dans l'eau.

2. Encre à l'eau selon la revendication 1,
dans laquelle la masse moléculaire de la résine soluble dans l'eau de la résine colorée soluble dans l'eau est inférieure ou égale à 10 000.

3. Encre à l'eau selon la revendication 1 ou 2,
dans laquelle le rapport de mélange entre la résine soluble dans l'eau et le colorant basique dans la résine colorée soluble dans l'eau est compris dans la plage de 10 : 1 à 1 : 1.

4. Encre à l'eau selon l'une des revendications 1 à 3,
dans laquelle la teneur de l'encre en la résine colorée soluble dans l'eau est de 1 à 10 % en poids.

5. Procédé d'enregistrement par jet d'encre pour une opération d'enregistrement, par envoi de minuscules gouttelettes d'une encre à l'eau pour jet d'encre qui comprend de l'eau, une résine organique soluble dans l'eau et un agent colorant comme composants essentiels,
dans lequel on utilise en tant qu'encre l'encre à l'eau pour jet d'encre selon la revendication 1.

6. Procédé de préparation d'une encre à l'eau pour jet d'encre comprenant comme composants essentiels de l'eau, un solvant organique soluble dans l'eau et un agent colorant,
dans lequel l'agent colorant comprend une résine colorée soluble dans l'eau,
dans lequel une résine soluble dans l'eau servant de composant principal de l'agent colorant est soumise à un traitement de coloration uniforme par un colorant basique, par les étapes comprenant :
le chauffage de la résine soluble dans l'eau pour préparer un liquide ayant une faible viscosité, et l'addition du colorant basique au liquide,
le mélange et l'agitation du produit résultant, pour le rendre uniforme,
le refroidissement du produit résultant, pour obtenir la résine colorée soluble dans l'eau,
l'addition de l'eau et du solvant organique soluble dans l'eau à la résine colorée soluble dans l'eau, et
le mélange, l'agitation et la filtration du produit résultant, pour obtenir l'encre à l'eau.

7. Procédé selon la revendication 6,
dans lequel le composant résine soluble dans l'eau de la résine colorée soluble dans l'eau est choisi dans le groupe consistant en une résine de 5,5'-diméthylhydantoïneformaldéhyde, obtenue par copolymérisation de 5,5'-diméthylhydantoïne et de formaldéhyde, une résine de 1-méthylol-5,5'-diméthylhydantoïne, obtenue par polymérisation par condensation de 1-méthylol-5,5'-diméthylhydantoïne.

8. Procédé selon la revendication 6 ou 7,
dans lequel la masse moléculaire de la résine soluble dans l'eau de la résine colorée soluble dans l'eau est fixée inférieure ou égale à 10 000.

9. Procédé selon l'une des revendications 6 à 8,
dans lequel le rapport de mélange entre la résine soluble dans l'eau et le colorant basique dans la résine soluble dans l'eau est compris dans la plage de 10 : 1 à 1 : 1.

10. Procédé selon l'une des revendications 6 à 9,
dans lequel la teneur de l'encre en la résine colorée soluble dans l'eau est de 1 à 10 % en poids.
